Europäisches Patentamt

European Patent Office

Office européen des brevets

(11) Veröffentlichungsnummer: **0 333 923**
**A2**

## (12) EUROPÄISCHE PATENTANMELDUNG

(21) Anmeldenummer: 88120582.7

(22) Anmeldetag: 09.12.88

(51) Int. Cl.⁴: **B23B 31/08**

(30) Priorität: 23.03.88 DE 3809838

(43) Veröffentlichungstag der Anmeldung:
27.09.89 Patentblatt 89/39

(84) Benannte Vertragsstaaten:
AT BE CH DE ES FR GB IT LI NL SE

(71) Anmelder: Emuge-Werk Richard Glimpel
Fabrik für Präzisionswerkzeuge
Nürnberger Strasse 96-100
D-8560 Lauf(DE)

(72) Erfinder: Watzke, Rüdiger, Dipl.Ing.(FH)
Erlloh 2
D-8567 Neunkirchen(DE)
Erfinder: Riedel, Hans-Peter
Kirchgasse 1a
D-8569 Happurg(DE)

(74) Vertreter: Czowalla . Matschkur Patentanwälte
Dr.-Kurt-Schumacher-Strasse 23 Postfach
9109
D-8500 Nürnberg 11(DE)

(54) **Schnellwechselfutter, insbesondere zum Schneiden von Innen- und Aussengewinden.**

(57) Schnellwechselfutter, insbesondere zum Schneiden von Innen- und Außengewinden, bestehend aus einem hohlprofilierten, eine innenliegende Druckfeder aufnehmenden Schaft mit einem der maschinenseitigen Aufnahme abgewandten Zylinderteil, in dem ein Futterkörper längsverschieblich angeordnet ist, dessen maschinenseitiges Ende mittels eine Übertragungsvorrichtung in Drehrichtung mit dem Zylinderteil lösbar verbunden ist und dessen werkzeugseitiges Ende zylinderförmig ausgebildet ist, in dem eine axial verschiebliche Einsatzaufnahme, die in Umfangsrichtung über ein längenausgleichendes Mitnehmersystem angetrieben wird und mit einer Zugbegrenzungsvorrichtung sowie einer Anschnittdruck-Einstellvorrichtung in Eingriff steht, über eine auf deren Stirnseite wirkende Druckfeder abstützend geführt ist, wobei der axiale Längenausgleich des Schnellwechselfutters durch die Druckfedern sowohl auf Zug als auch auf Druck erfolgt und zwischen dem Zylinderteil des Schaftes und dem maschinenseitigen Ende des Futterkörpers eine Umlaufsperrvorrichtung vorgesehen ist, mit wenigstens einer Lagernadel als Sperrkörper, die in Antriebsrichtung freilaufend in einer parallel zur Drehachse verlaufenden Tasche im maschinenseitigen Ende des Futterkörpers angeordnet ist und entgegen der Antriebsrichtung selbsttätig einkuppelnd von einer axial verlaufenden Gegentasche an der Innenmantelfläche des Zylinderteils teilweise aufgenommen wird, wobei Tasche und Gegentasche derart ausgebildet sind, daß die die Lagernadel beim Umlaufsperren abstützenden Eckkanten der Tasche bzw. der Gegentasche einen Innenwinkel größer/gleich 90° bilden.

FIG. 1

# Schnellwechselfutter, insbesondere zum Schneiden von Innen- und Außengewinden

Die Erfindung bezieht sich auf ein Schnellwechselfutter, insbesondere zum Schneiden von Innen- und Außengewinden, bestehend aus einem hohlprofilierten, eine innenliegende Druckfeder aufnehmenden Schaft mit einem der maschinenseitigen Aufnahme abgewandten Zylinderteil, in dem ein Futterkörper längsverschieblich angeordnet ist, dessen maschinenseitiges Ende mittels einer Übertragungsvorrichtung in Drehrichtung mit dem Zylinderteil lösbar verbunden ist und dessen werkzeugseitiges Ende zylinderförmig ausgebildet ist, in dem eine axial verschiebliche Einsatzaufnahme, die in Umfangsrichtung über ein längenausgleichendes Mitnehmersystem angetrieben wird und mit einer Zugbegrenzungsvorrichtung sowie einer Anschnittdruck-Einstellvorrichtung in Eingriff steht, über eine auf deren Stirnseite wirkende Druckfeder abstützend geführt ist, wobei der axiale Längenausgleich des Schnellwechselfutters durch die Druckfedern sowohl auf Zug als auch auf Druck erfolgt.

Derartige Schnellwechselfutter werden heutzutage in NC-gesteuerten Maschinen eingesetzt, um beispielsweise Innen- und Außengewinde auf eine vom Benutzer vorherbestimmte genaue Tiefe zu schneiden, um darüber hinaus beispielsweise einen stumpf gewordenen Gewindebohrer durch axialen Längenausgleich vor Überlastung aufgrund einer höheren Drehmomentenaufnahme zu schützen oder um auch beispielsweise einen angetriebenen Gewindebohrer vor Bruch infolge eines Auflaufens auf den Grund eines Sackloches zu bewahren.

Bei einem bekanntgewordenen Schnellwechselfutter der eingangs beschriebenen Art wird das vom Maschinenantrieb erzeugte Drehmoment über eine Aufnahme auf einen hohlprofilierten Schaft übertragen und folglich in dessen werkzeugseitiges, zylinderförmig ausgebildetes Ende eingeleitet. Über eine in diesem zylinderförmigen Ende angeordnete Übertragungsvorrichtung wird das Drehmoment bis zum Erreichen der vorgegebenen Gewindetiefe von dem maschinenseitigen, in dem Zylinderteil axial verschiebbaren Ende eines Futterkörpers aufgenommen und in dessen werkzeugseitiges und ebenfalls zylinderförmig ausgebildetes Ende eingebracht. Schließlich wird das Drehmoment über einen in dem werkzeugseitigen Ende des Futterkörpers längsverschiebbaren Aufnahmeeinsatz mittels eines längenausgleichenden Mitnehmersystems übertragen, so daß der in dem Aufnahmeeinsatz gehalterte Gewindebohrer angetrieben wird. Ein aufwendiges System zusammenwirkender Federn, die sowohl im hohlprofilierten Schaft als auch im zylinderförmig ausgebildeten Ende zwischen Futterkörper und Aufnahmeeinsatz angeordnet sind, dient in Verbindung mit dem Mitnehmersystem zum Längenausgleich auf Druck und Zug, um Unterschiede zwischen Vorschub und Gewindesteigung auszugleichen, die beispielsweise aufgrund zeitlicher Differenz zwischen Vorschubhalt und Drehrichtungswechsel der Maschinenspindel auftreten. Diese Ausführungsform eines Schnellwechselfutters weist schließlich noch eine im werkzeugseitigen Ende des Futterkörpers angebrachte und indirekt mit dem Aufnahmeeinsatz im Eingriff stehende Vorrichtung zum Einstellen des Anschnittdruckes auf, die dem Benutzer eine genaue Abstimmung auf verschiedene Materialien wie auch Gewindebohrer unterschiedlichen Typs oder Größe erlaubt. Nach Erreichen der voreingestellten Gewindetiefe wird der Drehmomentenfluß zwischen zylinderförmig ausgebildeten Ende des Schaftes und maschinenseitigen Ende des Futterkörpers durch Trennung des Formschlusses in der Übertragungsvorrichtung unterbrochen, so daß zwangsläufig der Gewindebohrer stehen bleibt. Somit ist ein Auflaufen des Gewindebohrer auf den Grund eines Sackloches unmöglich, was wiederum zur Vermeidung von Gewindebohrerbruch führen würde.

Obwohl die Bauweise dieser Ausführungsform eine - wie sonst noch durchaus gängige - wenig verschleißfeste Sicherheitskupplung zur Unterbrechung des Drehmomentenflusses zwischen Maschinenanatrieb und Gewindebohrer überflüssig macht, besteht ein solches Schnellwechselfutter dennoch aus einer Vielzahl von Einzelteilen, was zwangsläufig eine aufwendige und damit zusammenhängend teure Herstellung nach sich zieht. Derart viele Einzelteile bedingen darüber hinaus eine sehr große Baubreite dieses Schnellwechselfutters, so daß dessen Einsatz in NC-gesteuerten Maschinen od.dgl. aufgrund des erforderlichen Platzbedarfes stark eingeschränkt ist. Von entscheidendem Nachteil aber ist bei diesem Schnellwechselfutter die Tatsache, daß bei Drehrichtungswechsel zum Herausdrehen des Gewindebohrers der Maschineneantrieb zunächst anzuhalten ist und erst hiernach ein entgegengesetzt gerichteter Vorschub aufzubringen ist. Dies allerdings ist in Verbindung mit NC-gesteuerten Maschinen außerordentlich schwierig zu programmieren. Andererseits ist nach Drehrichtungswechsel ein Zurückrutschen der Übertragungsvorrichtung in den Eingriffszustand jederzeit wieder möglich, so daß in diesem Fall das Gewinde beim Herausdrehen des Gewindebohrers zerstört würde.

Der Erfindung liegt daher die Aufgabe zugrunde, ein Schnellwechselfutter der eingangs beschriebenen Gattung so auszugestalten, daß nach Erreichen einer vom Benutzer vorgegebenen Gewindetiefe bei Drehrichtungswechsel der Spindel eine sichere und das Zurückrutschen in den Einkupplungszustand verhindernde, zugleich außerordentlich verschleißfeste Kraftflußverbindung trotz unterbrochenen Drehmomentenflusses hergestellt werden kann, wodurch eine hohe Lebensdauer des Schnellwechselfutters insgesamt zu erreichen ist, und daß darüber hinaus durch eine kleine Baubreite hohe Wirtschaftlichkeit hinsichtlich Herstellung und späteren Einsatz eines solchen Schnellwechselfutters zu erzielen ist.

Zur Lösung dieser Aufgabe ist erfindungsgemäß vorgesehen, daß zwischen dem Zylinderteil des Schaftes und dem maschinenseitigen Ende des Futterkörpers eine Umlaufsperrvorrichtung vorgesehen ist, mit wenigstens einer Lagernadel als Sperrkörper, die in Antriebsrichtung freilaufend in einer parallel zur Drehachse verlaufenden Tasche im maschinenseitigen Ende des Futterkörpers angeordnet ist und entgegen der Antriebsrichtung selbsttätig einkuppelnd von einer axial verlaufenden Gegentasche an der Innenmantelfläche des Zylinderteils teilweise aufgenommen wird, wobei Tasche und Gegentasche derart ausgebildet sind, daß die die Lagernadel beim Umlaufsperren abstützenden Eckkanten der Tasche bzw. der Gegentasche einen Innenwinkel $\alpha$, $\beta$ größer/gleich 90° aufweisen.

Durch die erfindungsgemäße Ausgestaltung des Schnellwechselfutters ergibt sich nach dem genauen Erreichen einer vorgegebenen Gewindetiefe beim Reversieren der Spindeldrehrichtung eine sehr einfache Möglichkeit, trotz des zwischen Schaft und Futterkörper unterbroche nen Drehmomentenflusses einen Kraftfluß zwischen diesen beiden Teilen herzustellen, so daß diese miteinander entgegen der Antriebsrichtung verklemmt werden. Hierdurch wird zuverlässig ein Zurückrutschen zum erneuten Einkuppeln und damit eine Beschädigung oder Zerstörung des Gewindes während des Herausdrehens des Gewindebohrers verhindert. Die Umlaufsperrvorrichtung, die die Kraft vom zylinderförmig ausgebildeten Ende des Schaftes auf das maschinenseitige Ende des Futterkörpers einleitet, ist dabei außerordentlich verschleißfest ausgebildet, da Kräfte bekanntlich bei Lagernadeln über eine linienförmige Kontaktfläche auf angrenzende Teile weitergeleitet werden. Dementsprechend wird auch die Hertz'sche Pressung über die Linienberührungen der Lagernadel auf die Fläche der anliegenden Teile gleichmäßig aufgenommen bzw. verteilt und somit im Vergleich zu Kugeln als Rollkörper, die auftretende Kräfte lediglich in Form von Punktlast übertragen können, äußerst gering gehalten. Zumeist durch die Hertz'sche Pressung hervorgerufene Schäden wie Grübchenbildung, Verschleiß oder Fressen u. ä. verhindert. Aus diesem grunde können sowohl die Lagernadeln als auch die mit den dazugehörigen Berührungsflächen versehenen, anliegenden Teile auch bei Auftreten großer Übertragungskräfte klein dimensioniert werden. Zudem wird durch die besondere Ausbildung der beim Umlaufsperren die Lagernadel abstützenden Eckkanten von Tasche und Gegentasche der Kraftfluß außerordentlich günstig gestaltet, indem die auftretenden Kräfte nicht ausschließlich von den Eckkanten selbst aufgenommen werden können, sondern vielmehr in das Zylinderteil bzw. den Futterkörper insgesamt eingeleitet werden, wodurch zusätzlich noch die Lebensdauer eines derartigen Schnellwechselfutters erhöht wird. Schließlich läßt sich ein solches Schnellwechselfutter aufgrund lediglich weniger Einzelteile durchaus kostengün stig herstellen und vom Benutzer infolge der hohen Lebensdauer sowie der geringen Baubreite wirtschaftlich verwenden. Letztendlich ist dieses Schnellwechselfutter vom Benutzer auch einfacher zu handhaben, da die NC-gesteuerte Maschine z. B. nach dem Entkuppeln bei Drehrichtungswechsel nicht erst wieder einen Vorschub erhalten muß und folglich die hierfür notwendige, doch recht schwierige Programmierung entfällt.

Insbesondere weist die Innenmantelfläche des Zylinderteils erfindungsgemäß wenigstens eine Gegentasche auf, um so den Leerlauf zu Beginn des Drehrichtungswechsels durch beispielsweise drei über den Umfang gleichmäßig verteilte Gegentaschen auf ein Minimum zu begrenzen.

In weiterer Ausgestaltung der Erfindung ist vorgesehen, daß zwei in tangential verlaufenden Bohrungen des maschinenseitigen Endes aufgenommene, senkrecht gegen jeweils ein Ende der Lagernadel wirkende Federn die Lagernadel gegen die Innenmantelfläche des Zylinderteils drücken. Durch diese Maßnahme ist sichergestellt, daß bei Drehrichtungswechsel tatsächlich ein Kraftfluß zwischen Schaft und Futterkörper erfolgt, indem die Lagernadel aus der im Futterkörper vorgesehenen Tasche in die entsprechende Gegentasche herausgedrückt wird. Dabei stellt diese Anordnung der Federelemente nicht nur eine wirkungsvolle, sondern vielmehr auch eine platzsparende Maßnahme dar.

Schließlich liegt es noch zur Unterstützung der kompakten bauweise dieses Schnellweckselfutters im Rahmen der Erfindung, daß der Außenmantel des Zylinderteils und derjenige des werkzeugseitigen Endes des Futterkörpers im Durchmesser genau übereinstimmen und von einer Führungsbuchse umfaßt sind.

Weitere Merkmale, Einzelheiten und Vorteile der Erfindung ergeben sich aus der nachfolgenden Beschreibung einer bevorzugten Ausführungsform der Erfindung sowie anhand der Zeichnung. Hierbei zeigen:

Fig. 1 einen Längsschnitt durch ein erfindungsgemäßes Schnellwechselfutter,

Fig. 2 einen vergrößerten Querschnitt durch ein Schnellwechselfutter längs der Linie II-II in Fig. 1,

Fig. 3 einen vergrößerten Querschnitt durch ein Schnellwechselfutter längs der Linie III-III in Fig. 1 und

Fig. 4 eine Vergrößerung im Bereich von Tasche und Gegentasche des Futterkörpers bzw. des Schaftes eines Schnellwechselfutters entsprechend dem Ausschnitt IV in Fig. 3.

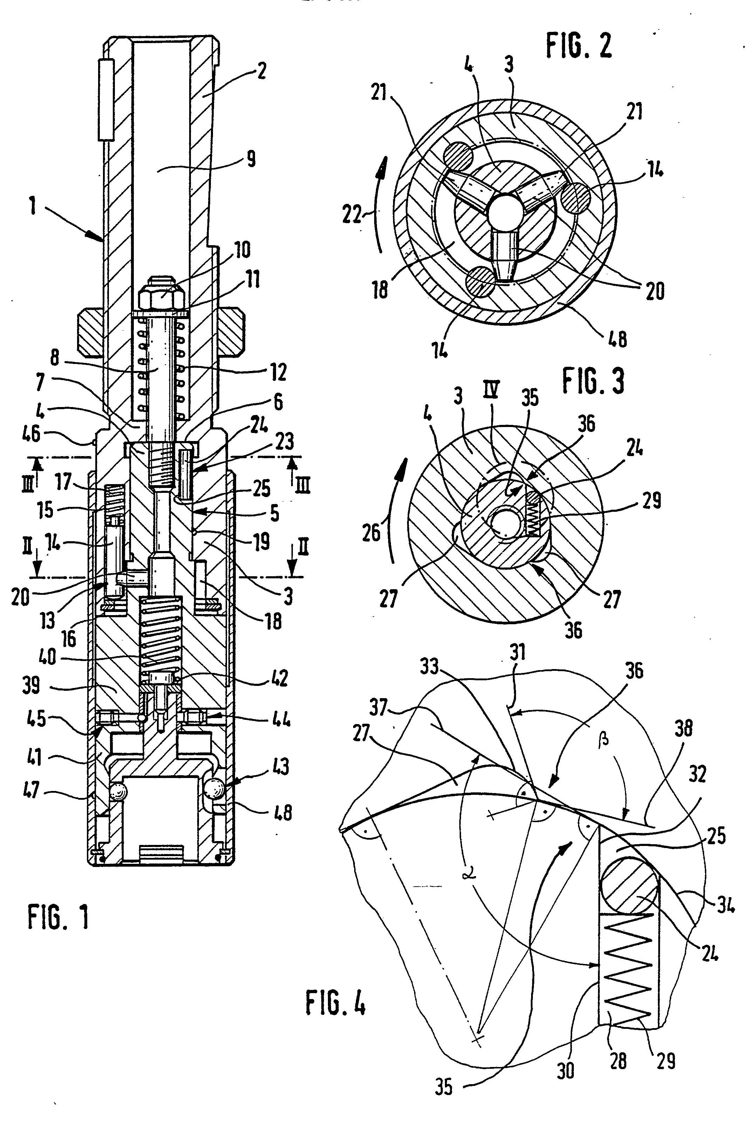

Das in Fig. 1 dargestellte Schnellwechselfutter besteht aus einem hohlprofilierten Schaft 1, dessen maschinenseitiges Ende 2 mit einer Aufnahme versehen und dessen anderes, werkzeugseitiges Ende 3 zylinderförmig ausgebildet ist. In den Zylinderteil 3 des Schaftes 1 ist das maschinenseitige Ende 4 des Futterkörpers 5 eingesetzt, welches mit der Stirnseite 6 an eine das maschinenseitige Ende 2 von dem werkzeugseitigen Zylinderteil 3 abtrennende Zwischenwand 7 des Schaftes 1 anschlägt und über einen durch die Zwischenwand 7 geführten Schraubenbolzen 8 gehaltert wird. Der in die Bohrung 9 des Schaftes 1 hineinragende Schraubenbolzen 8 ist über eine Mutter 10 mit Scheibe 11 gekontert, wobei zwischen Scheibe 11 und der Zwischen wand 7 eine für den Längenausgleich auf Zug vorgesehene Druckfeder 12 angeordnet ist.

Der Zylinderteil 3 selbst weist eine Übertragungsvorrichtung 13 auf, die mit dem maschinenseitigen Ende 4 des Futterkörpers 5 lösbar in Eingriff steht. Entsprechend Fig. 2 ist die Übertragungsvorrichtung 13 aus drei gleichmäßig über den Umfang verteilten Zylinderstiften 14 gebildet, die jeweils in einer axialen Bohrung 15 aufgenommen sind. Während der Zylinderstift 4 mit seinem vorzugsweise kegelförmig ausgebildeten Stirnende über eine Sicherungsring 16 mit Unterlegscheibe in werkzeugseitiger Richtung festgelegt ist, stützt sich der Zylinderstift 14 mit seiner anderen Stirnseite an einer in der Bohrung 15 liegenden Feder 17 ab und ist somit nach Überwindung der von der Feder 17 aufgebrachten Druckkraft durchaus in maschinenseitiger Richtung verschiebbar. Im Bereich eines Freistichs 18 an der Innenmantelfläche 19 des Zylinderteils 3 sind des weiteren drei ebenfalls über den Umfang gleichmäßig verteilte, jedoch radial liegende Zylinderstifte 20 im maschinenseitigen Ende 4 des Futterkörpers 5 eingebracht, deren kegelstumpfförmiger, in den Freistich 18 hineinragender Kopf 21 während der Übertragung des Drehmomentenflusses und somit in Antriebsrichtung 22 jeweils an der Außenmantelfläche des Zylinders 14 anliegt.

Wie in den Fig. 1 und 3 dargestellt, ist weiterhin zwischen dem Zylinderteil 3 des Schaftes 1 und dem maschinenseitigen Ende 4 des Futterkörpers 5 eine Umlaufsperrvorrichtung 23 vorgesehen.

Diese besteht aus einer Lagernadel 24 als Sperrkörper, die in Antriebsrichtung 22 freilaufend in einer parallel zur Drehachse verlaufenden Tasche 25 - hier vorzugsweise -im maschinenseitigen Ende 4 des Futterkörpers 5 ange ordnet ist und entgegen der Antriebsrichtung 26 selbsttätig einkuppelnd von einer axial verlaufenden Gegentasche 27 an der Innenmantelfläche 19 des Zylinderteils 3 teilweise aufgenommen wird. In zwei tangential verlaufenden Bohrungen 28 des maschinenseitigen Endes 4 sind dabei Druckfedern 29 eingesetzt, die jeweils gegen ein Ende der Lagernadel 24 wirken und diese gegen die Innenmantelfläche 19 des Zylinderteils 3 bzw. hier gegen jeweils eine der drei angebrachten Gegentaschen 27 drücken.

Durch die besondere Ausgestaltung - gemäß Fig. 4 -einer solchen Gegentasche 27 wird die Lagernadel 24 in Antriebsrichtung aus der Gegentasche 27 gegen die Federkraft der Feder 29 in die Tasche 25 des maschinenseitigen Endes 4 des Futterkörpers 5 zurückgedrängt, so daß die Lagernadel 24 bis zum Erreichen der nächsten Gegentasche erneut an der Innenmantelfläche 19 des Zylinderteils 3 abrollt. Im Gegensatz hierzu verklemmt sich die Lagernadel 24 allerdings bei entgegengesetzter Antriebsrichtung zwischen den Eckkanten 35, 36 von Tasche 25 und Gegentasche 27 an den Abstützebenen 30, 31. Dabei ist die im Futterkörper 5 befindliche Abstützebene 30 identisch mit der der Drehachse des Futterkörpers 5 näherliegenden Seitenwand 32 der Tasche 25. Die Abstützebene 31 wird durch die an dem Krümmungskreis 33 der Gegentasche 27 anliegende Tangentenebene gebildet, die im Schnittpunkt von Krümmungskreis 33 der Gegentasche 27 und Außenmantelfläche 34 des maschineneseitigen Futterkörpers 5 bzw. Innenmantelfläche 19 des Zylinderteils 3 errichtet ist. Um nun die Eckkanten 35, 36 der Tasche 25 bzw. der Gegentasche 27 von den beim Umlaufsperren durch die Lagernadel 25 hervorgerufenen Kräften weitgehenst zu entlasten und vielmehr den Kraftfluß direkt in den maschinenseitigen Futterkörper 5 bzw. in das Zylinderteil 3 einleiten zu können, sind die Eckkanten 35, 36 erfindungsgemäß mit einem Innenwinkel $\alpha$, $\beta$ größer/gleich 90° ausgestattet. Während der Innenwinkel $\alpha$ dabei von der Abstützebene 30 der Lagernadel 25 und der im Schnittpunkt von Abstützebene 30 und Außenmantelfläche 24 des maschineneseitigen Futterkörpers 5 errichteten Tangentenebene 37 eingeschlossen wird, wird der Innenwinkel $\beta$ durch die Abstützebene 31 der Lagernadel 25 und der im Schnittpunkt von Abstützebene 31 und Außenmantelfläche 24 des maschineneseitigen Futterkörpers 5 errichteten Tangentenebene 38 begrenzt. Durch eine derartige Ausbildung der Eckkanten 35, 36 werden beim Umlaufsperren durch die Lagernadel 25 Verschleißerscheinungen wie Grübchenbildung, Fressen od.dgl., die bevorzugt an den am meisten beanspruchten Stellen - eben den Eckkanten - auftreten, zusätzlich zu der Herabsetzung der Hertz'schen Pressung aufgrund Verwendung einer Lagernadel 25 als Sperrkörper, auf einfache Art und Weise vermieden.

Schließlich nimmt das werkzeugseitige, zylinderförmig ausgebildete Ende 39 des Futterkörpers 5 eine Druckfeder 40 für den Längenausgleich auf Druck sowie eine Einsatzaufnahme 41 auf, wobei sich die Druckfeder 40 auf der Stirnseite 42 der Einsatzaufnahme 41 und in dem werkzeugseitigen Ende 39 des Futterkörpers 5 abstützt. Das werkzeugseitige Ende 39 und die Einsatzaufnahme 41 stehen ihrerseits über ein längenausgleichendes Mitnehmersystem 43 zur Übertragung des Drehmomentes auf den Gewindebohrer miteinander in Eingriff. Desweiteren ist in dem werkzeugseitigen Ende 39 eine Zugbegrenzungsvorrichtung 44 in Form einer in das werkzeugseitige Ende 39 eingeschraubten Gewindeschraube, welche in eine axial begrenzte Längsnut an der Einsatzaufnahme 41 eingreift, vorgesehen ist, um zu verhindern, daß sich die Einsatzaufnahme 41 aus dem Futterkörper beliebig weit herausbewegen läßt. Letztendlich läßt sich bei einem derartigen Schnellwechselfutter noch der Anschnittdruck des eingesetzten Gewindebohrers, abhängig von dessen jeweiligen Typ, Größe od.dgl., mittels einer Vorrichtung 45 einstellen. Diese weist eine in dem werkzeugseitigen Ende 39 gelagerte, mit einstellbarer Federkraft belastete Kugel auf, die gegen eine Auflauffläche an der Einsatzaufnahme 41 angedrückt ist und bei axialer Bewegung der Einsatzaufnahme 41 in maschinenseitiger Richtung zunächst an einer Schulter anstößt und schließlich bei weiterer Axialbewegung in dieser Richtung von der Einsatzaufnahme 41 überrastet wird. Schließlich sind noch die im Durchmesser genau übereinstimmenden Außenmäntel 46, 47 von Zylinderteil 3 bzw. vom werkzeugseitigen Ende 39 des Futterkörpers 5 von einer Führungsbuchse 48 umfaßt, wodurch sich eine geringe Baubreite des Schnellwechselfutters insgesamt erzielen läßt. Zudem verhindert diese Führungsbuchse 48 ein Herausfallen der Kupplungskörper des Mitnehmersystems 43 und schützt gleichzeitig das gesamte Schnellwechselfutter vor Schmutz, Spänen od.dgl.

Das von dem Maschinenantrieb erzeugte Drehmoment wird über eine Aufnahme auf den Schaft 1 übertragen und in dessen werkzeugseitiges, zylinderförmig ausgebildetes Ende 3 eingeleitet. Über eine hierin angeordnete Übertragungsvorrichtung 13 in Form dreier über den Umfang gleichmäßig verteilter und in axialer Richtung verschiebbarer Zylinderstifte, die mit radial im maschinenseitigen Ende 4 des Futterkörpers 5 versehenen Zylinderstiften 20 in Eingriff stehen, wird das Drehmoment auf den Futterkörper 5 übertragen. Dabei wird das maschinenseitige Ende 4 vom Zylinderteil 3 aufgenommen und ist in diesem axial verschiebbar gelagert. Schließlich gelangt das Drehmoment über das werkzeugseitige Ende 39 des Futterkörpers 5, welches ebenfalls zylinderförmig ausgebildet ist und seinerseits einen längsverschiebbaren Aufnahmeeinsatz 41 haltert, auf diesen Aufnahmeeinsatz 41 mittels eines längenausgleichenden Mitnehmersystems 43, so daß der hierin befestigte, in den Fig. nicht dargestellte Gewindebohrer angetrieben wird. Der über den Schaft 1 erfolgte Spindelvorschub wird nun beim Erreichen einer vorgegebenen Gewindetiefe gestoppt, die um einen von Vorschub und Gewindesteigung abhängigen Anteil der endgültigen Gewindetiefe geringer ausfällt. Während der Schaft 1 beim Umschalten der Drehrichtung festgehalten wird, dreht sich der Futterkörper 5 wegen Nachlaufens der Spindel in werkzeugseitiger Richtung solange weiter, bis die radialen Zylinderstifte 20 mit den axialen Zylinderstiften 14 im Zylinderteil 3 außer Eingriff kommen. In diesem Moment ist die tatsächlich vorgegebene Gewindetiefe erreicht, so daß der Futterkörper 5 ebenfalls keine Drehbewegung mehr ausführt. Während - wie in diesem Fall - der Längenausgleich auf Zug durch die Druckfeder 12 erfolgt, ist ebenfalls während des Nachlaufens der Spindel ein Längenausgleich auf Druck mittels Druckfeder 40 möglich, die sich zwischen Futterkörper 5 und Einsatzaufnahme 41 an deren Stirnseite 42 abstützt. Gleichzeitig mit der Trennung von Zylinderteil 3 und Futterkörper 5 durch die Übertragungsvorrichtung 13 bzw. mit dem Stillstand des Futterkörpers 5 ist die Antriebsrichtung der Maschine bereits umgeschaltet, woraufhin die Umlaufsperrvorrichtung 23 zu wirken beginnt. Die Lagernadel 24 wird schon zu Beginn des Drehrichtungswechsels aus ihrer Tasche 25 herausgedrückt und von der Gegentasche 27 teilweise aufgenommen. Folglich ist trotz unterbrochenen Drehmomentenflusses wieder ein Kraftfluß durch die Verklemmung der Lagernadel 24 zwischen Zylinderteil 3 und Futterkörper 5 hergestellt. Dieser Kraftfluß erlaubt also sofort mit Drehrichtungswechsel ein zerstörungsfreies Herausziehen des Gewindebohrers aus dem geschnittenen Gewinde. Neben einer platzsparenden Anordnung wird gleichzeitig durch Verwendung einer Lagernadel 24 als Sperrkörper die Lebensdauer des Schnellwechselfutters insgesamt wesentlich erhöht, da die durch die Verklemmung hervorgerufenen Hertz'sche Pressung mit derartigen Rollkörpern um ein vielfaches verringert werden kann.

EP 0 333 923 A2

## Ansprüche

1. Schnellwechselfutter, insbesondere zum Schneiden von Innen- und Außengewinden, bestehend aus einem hohlprofilierten, eine innenliegende Druckfeder aufnehmenden Schaft mit einem der maschinenseitigen Aufnahme abgewandten Zylinderteil, in dem ein Futterkörper längsverschieblich angeordnet ist, dessen maschinenseitiges Ende mittels einer Übertragungsvorrichtung in Drehrichtung mit dem Zylinderteil lösbar verbunden ist und dessen werkzeugseitiges Ende zylinderförmig ausgebildet ist, in dem eine axial verschiebliche Einsatzaufnahme, die in Umfangsrichtung über ein längenausgleichendes Mitnehmersystem angetrieben wird und mit einer Zugbegrenzungsvorrichtung sowie einer Anschnittdruck-Einstellvorrichtung in Eingriff steht, über eine auf deren Stirnseite wirkende Druckfeder abstützend geführt ist, wobei der axiale Längenausgleich des Schnellwechselfutters durch die Druckfedern sowohl auf Zug als auch auf Druck erfolgt, dadurch gekennzeichnet, daß zwischen dem Zylinderteil (3) des Schaftes (1) und dem maschineneseitigen Ende (4) des Futterkörpers (5) eine Umlaufsperrvorrichtung (23) vorgesehen ist, mit wenigstens einer Lagernadel (24) als Sperrkörper, die in Antriebsrichtung freilaufend in einer parallel zur Drehachse verlaufenden Tasche (25) im maschinenseitigen Ende (4) des Futterkörpers (5) angeordnet ist und entgegen der Antriebsrichtung selbsttätig einkuppelnd von einer axial verlaufenden Gegentasche (27) an der Innenmantelfläche (19) des Zylinderteils (3) teilweise aufgenommen wird, wobei Tasche (25) und Gegentasche (27) derart ausgebildet sind, daß die die Lagernadel (24) beim Umlaufsperren abstützenden Eckkanten (35, 36) der Tasche (25) bzw. der Gegentasche (27) einen Innenwinkel ($\alpha$, $\beta$) größer/gleich 90° aufweisen.

2. Schnellwechselfutter nach Anspruch 1, dadurch gekennzeichnet, daß die Innenmantelfläche (19) des Zylinderteils (3) wenigstens eine Gegentasche (27) aufweist.

3. Schnellwechselfutter nach einem der Ansprüche 1 und 2, dadurch gekennzeichnet, daß zwei in tangential verlaufenden Bohrungen (28) des maschinenseitigen Endes (4) aufgenommene, senkrecht gegen jeweils ein Ende der Lagernadel wirkende Federn (29) die Lagernadel (24) gegen die Innenmantelfläche (19) des Zylinderteils (3) drücken.

4. Schnellwechselfutter nach einem der Ansprüche 1 bis 3, dadurch gekennzeichnet, daß der Außenmantel (46) des Zylinderteils (3) und derjenige (47) des werkzeugseitigen Endes (4) des Futterkörpers (5) im Durchmesser genau übereinstimmen und von einer Führungsbuchse (48) umfaßt sind.

6

FIG. 1

FIG. 2

FIG. 3

FIG. 4